(19) Europäisches Patentamt
European Patent Office
Office européen des brevets

(11) EP 1 216 410 B1

(12) **FASCICULE DE BREVET EUROPEEN**

(45) Date de publication et mention de la délivrance du brevet:
**30.12.2009 Bulletin 2009/53**

(21) Numéro de dépôt: **00966233.9**

(22) Date de dépôt: **29.09.2000**

(51) Int Cl.:
***G01N 21/17*** *(2006.01)* ***C12Q 1/68*** *(2006.01)*

(86) Numéro de dépôt international:
**PCT/FR2000/002702**

(87) Numéro de publication internationale:
**WO 2001/023866 (05.04.2001 Gazette 2001/14)**

# (54) PROCEDE D'ANALYSE D'ACIDES NUCLEIQUES FIXES SUR UN SUPPORT

VERFAHREN ZUR ANALYSE VON AUF EINEM TRÄGER FIXIERTEN NUKLEINSÄUREN

METHOD FOR ANALYSING NUCLEIC ACIDS IMMOBILISED ON A SUPPORT

(84) Etats contractants désignés:
**AT BE CH CY DE DK ES FI FR GB GR IE IT LI LU MC NL PT SE**

(30) Priorité: **30.09.1999 FR 9912230**

(43) Date de publication de la demande:
**26.06.2002 Bulletin 2002/26**

(73) Titulaire: **COMMISSARIAT A L'ENERGIE ATOMIQUE**
**75015 Paris (FR)**

(72) Inventeurs:
- **VINET, Françoise**
  **F-38000 Grenoble (FR)**
- **CHATON, Patrick**
  **F-38570 Theys (FR)**

(74) Mandataire: **Audier, Philippe André et al**
**Brevalex**
**3, rue du Docteur Lancereaux**
**75008 Paris (FR)**

(56) Documents cités:
**US-A- 5 874 213**

- **ADELHELM K ET AL: "Development of a sensitive detection system based on the photothermal effect for biomolecular interaction studies" BIOMEDICAL OPTOELECTRONICS IN CLINICAL CHEMISTRY AND BIOTECHNOLOGY; BARCELONA, SPAIN SEP 14-15 1995, vol. 2629, 14 septembre 1995 (1995-09-14), pages 325-333, XP000925207 Proc SPIE Int Soc Opt Eng; Proceedings of SPIE - The International Society for Optical Engineering 1996 Society of Photo-Optical Instrumentation Engineers, Bellingham, WA, USA**
- **ODAKE TAMAO ET AL: "High-speed separation using miniaturized slab gel and high spatial resolution detection by thermal lens microscope" PROCEEDINGS OF THE 1998 THERMAL THERAPY, LASER WELDING, AND TISSUE INTERACTION;STOCKHOLM, SWE SEP 9-SEP 11 1998, vol. 3565, 9 septembre 1998 (1998-09-09), pages 126-133, XP000925278 Proc SPIE Int Soc Opt Eng;Proceedings of SPIE - The International Society for Optical Engineering 1999 Society of Photo-Optical Instrumentation Engineers, Bellingham, WA, USA**
- **KITAMORI T: "Chemistry and analysis in integrated chemistry lab on chip" DIGEST OF PAPERS. MICROPROCESSES AND NANOTECHNOLOGY '99. 1999 INTERNATIONAL MICROPROCESSES AND NANOTECHNOLOGY CONFERENCE, DIGEST OF PAPERS. MICROPROCESSES AND NANOTECHNOLOGY '99. 1999 INTERNATIONAL MICROPROCESSES AND NANOTECHNOLOGY CONFERENCE, YOKOHA, pages 70-71, XP000925538 1999, Tokyo, Japan, Japan Society of Applied Physics, Japan ISBN: 4-930813-97-2**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 216 410 B1

## Description

### Domaine technique

La présente invention se rapporte notamment à un procédé de caractérisation, de quantification et de cartographie d'une base azotée, d'un acide nucléique, ou d'une base azotée d'un acide nucléique, fixé(e) sur un support. Elle se rapporte également à un procédé de fabrication d'une biopuce à acides nucléiques formée notamment d'un support solide sur lequel est fixé au moins un acide nucléique.

De manière générale, la présente invention trouve une application dans le domaine des dispositifs d'analyse chimique ou biologique utilisés pour le séquençage et l'étude de l'expression des gènes.

Par exemple, ces dispositifs peuvent être constitués d'un ensemble de sondes moléculaires identiques ou différentes, par exemple d'acides nucléiques, fixées sur la surface miniaturisée d'un support, ou micro-surface. Ils constituent ce qui est habituellement appelé une biopuce, ou puce à ADN lorsque l'acide nucléique est un acide désoxyribonucléotidique et puce à ARN lorsque l'acide nucléique est un acide ribonucléotidique. L'ensemble des acides nucléiques fixés sur les micro-surfaces de support forme une matrice de sondes.

Au cours de l'analyse d'un échantillon au moyen d'une puce à ADN, les acides nucléiques cible d'un extrait sont marqués et déposés sur la matrice de sondes. L'hybridation, c'est-à-dire l'appariement entre les molécules d'acides nucléiques complémentaires, entre les sondes et les cibles marquées, permet de repérer et d'identifier les séquences d'acides nucléiques présentes dans l'échantillon analysé.

De nombreux procédés de fabrication de biopuces ont été décrits et développés ces dernières années pour améliorer la miniaturisation et la capacité ou densité de sites d'analyse sur une puce.

Parmi ceux-ci, certains consistent à synthétiser in situ des acides nucléiques sondes sur des substrats structurés. La méthode de synthèse fait appel à deux modes d'adressage différents pour structurer le substrat : soit à un mode d'adressage manuel, ou mécanique, soit à un mode d'adressage photochimique ou utilisant des techniques de lithographie.

Le premier mode d'adressage est un adressage manuel au moyen d'un microrobot ou en utilisant un synthétiseur automatique couplé à la structure du substrat. Ce mode d'adressage est décrit par exemple dans le document Southern EM, Nucleic Acid Research, 25 avril 1994, 22(8) : 1368-1373.

Une amélioration significative des techniques de dépôt par micropipetage à l'aide de microrobots ou par des méthodes d'impression par jet permet d'envisager des procédés industriels de réalisation des sondes par des méthodes de synthèse chimique. Les documents WO-A-94 27719 de PROTOGENE LAB INC. et A.P. Blanchard, R.J. Kaiser, L.E. Hood, Biosensors and Bioelectronics, vol. 11, n°6/7, pages 687 à 690, 1996 décrivent l'utilisation de techniques d'impression par jet pour distribuer sur différents sites de la biopuce à ADN les quatre nucléotides activés de base de l'ADN ainsi que les réactifs de couplage.

Le deuxième mode d'adressage comprenant les techniques d'adressage photochimique et les techniques lithographiques est décrit par exemple dans Affymetrix, Proc. Natl. Acad. Sci. USA, 1996, Nov. 26 ; 93(24), 13555-60.

Dans ces deux modes d'adressage, la synthèse met en jeu des réactions classiques de couplage par l'intermédiaire de phosphoramidites ou phosphites pour une condensation successive des nucléosides judicieusement protégés. Le document Caruthers, Science, Oct. 85, page 281 décrit un cycle de synthèse comprenant les étapes de déprotection, de couplage, de blocage ("capping") et d'oxydation. Ce cycle permet de faire croître l'oligonucléotide à partir de la surface du support constituant la biopuce.

Contrairement à certains modes d'adressage, dans lesquels l'oligonucléotide est présynthétisé et donc purifié et qualifié avant d'être greffé sur le support solide, les deux modes d'adressage précités requièrent une caractérisation des acides nucléiques synthétisés après chaque étape de couplage des nucléotides car il n'y a pas de possibilité de purification après la synthèse.

Par exemple, une synthèse sur support solide dans des sites de (100x100) $\mu m^2$ à partir de quantités de réactifs de quelques n1 nécessite une optimisation du procédé de synthèse afin d'obtenir un rendement de couplage le plus proche possible de 100%. En effet, la qualité de l'hybridation va dépendre de la pureté des sondes synthétisées. Il est donc nécessaire de qualifier chaque étape de synthèse et de pouvoir vérifier les séquences synthétisées.

De plus, après la réalisation de la synthèse des oligonucléotides, un contrôle de la densité des sondes ainsi que l'uniformité de cette densité sur le substrat doit être effectué.

### Etat de la technique

La méthode la plus utilisée pour les calculs de rendement par étape est la mesure de l'absorption à 500 nm des cations diméthoxytrityl après déprotection des nucléosides. Cette méthode est par exemple décrite dans Tetrahedron Letters, vol. 25, n°4, pages 375 à 378, 1984.

Selon les quantités de sondes synthétisées les absorbances à mesurer peuvent varier entre 0,2 et $20^{-3}$, cette

absorption est en général mesurée par un spectromètre à double faisceau dont la précision absolue est de l'ordre de 0,1%. Il se pose un problème de sensibilité de l'instrument de caractérisation nécessaire à la synthèse in situ. Si la mesure d'absorbance est suffisamment précise <$10^{-3}$, il est possible de calculer le rendement par étape. Cette mesure n'est pas spécifique d'une base et ne peut donc pas donner d'indication sur la séquence synthétisée. Le dosage du cation trityl est global pour l'ensemble du substrat, il permet de calculer une densité moyenne de sondes par substrat mais ne donne aucune indication sur son uniformité.

Le document Pease A.C. Proc. Natl. Acad. Sci. USA, mai 1994, vol. 91, pages 5022 à 5026 décrit une mesure de la fluorescence après hybridation avec des sondes marquées équivalentes aux sondes synthétisées qui permet de déterminer les séquences. Mais cette mesure intervient après la synthèse complète des sondes, aucune information sur le rendement étape par étape ne peut être obtenue.

Une amélioration de cette technique vient d'être proposée par Affymetrix dans Glen Mac Gall, J. Org. Chem., 1998, 63, pages 241 à 246. Elle permet d'obtenir un rendement à chaque étape de synthèse. Des régions de longueurs d'acides nucléiques variables sont définies par lithographie, et en fin de synthèse, un couplage avec un phosphoramidite comportant de la fluorescéine est effectué sur toutes les sondes de longueurs variables.

Cette méthode permet la mise au point des procédés de synthèse sur support solide mais elle ne permet pas de caractériser les étapes successives de greffage des oligonucléotides avant la fin de la synthèse complète des différents oligonucléotides.

La technique MALDI-TOF ("Matrix Assisted Laser Desorption/Ionization Time of Flight") décrite dans Little P.D., Anal. Chem. 1997, 69, pages 4540 à 4546, a été mise en oeuvre pour analyser des biopuces comportant des sondes d'ADN. Cette technique est actuellement celle qui permet la meilleure résolution pour des quantités d'analyse pouvant aller jusqu'à 2,5 fentomole. Malheureusement, elle est destructive et demande une mise en oeuvre spécifique. En effet, les sondes doivent être clivables chimiquement en fin de synthèse et être co-cristallisées avec un matériau permettant l'absorption du laser utilisé.

Une autre technique encore consiste à effectuer un clivage des sondes après synthèse. Ceci permet leur analyse par HPLC ("High Pressure Liquid Chromatography"). Cette méthode peut aider à la mise au point de procédés de synthèse sur support solide, mais ne peut en aucun cas être utilisée pour la caractérisation de la synthèse in situ sur substrat structuré.

La publication "Development of a sensitive détection system based on the photothermal effect for biomolecular interaction studies", ADELHELM K et AL, BIOMEDICAL OPTOELECTRONICS IN CLINICAL CHEMISTRY, VOL. 2629, 14 septembre 1995, pages 325-333, et la demande de brevet US-A-5874213 divulguent des procédés de détection photothermique de réaction entre molécules. Ces procédures nécessitent un marquage des molécules.

Il est aussi connu par la publication "High-speed separation using miniaturized slab gel and high spatial resolution détection by thermal lens microscope", ODAKE TAMAO et AL, PROCEEDINGS OF THE 1998 THERMAL THERAPY, LASER WELDING, AND TISSUE INTERACTIONS, VOL. 3565, 9 septembre 1998, pages 126-133, de détecter par une méthode photothermique sans marquage des fragments d'ADN séparés sur un gel d'électrophorèse.

## Exposé de l'invention

La présente invention a précisément pour but de fournir un procédé permettant notamment de qualifier chaque étape de synthèse d'une biopuce et de vérifier la séquence d'acides nucléiques synthétisés sur le support, leur densité et leur uniformité, ledit procédé palliant les problèmes précités rencontrés dans les techniques de l'art antérieur notamment pour le contrôle de la fabrication des biopuces à acides nucléiques.

Le procédé de l'invention permet de caractériser, de quantifier et de cartographier une base azotée, un acide nucléique ou une base azotée d'un acides nucléiques, fixé(e) sur un support. Il est caractérisé en ce qu'il consiste respectivement à caractériser, quantifier et cartographier ledit acide nucléique ou ladite base azotée sans marquage par une méthode par effet mirage.

Afin de simplifier la description qui suit, il est fait usage du terme "échantillon" pour désigner une base azotée, un acide nucléique ou une base azotée d'un acide nucléique fixé(e) sur un support.

Les acides nucléiques et bases azotées sont par exemple décrits dans l'ouvrage "Biochimie Générale", J.H. WEIL, 6ème Edition - MASSON, pages 279-288.

Dans la présente description et les revendications en annexe, le terme acide nucléique désigne une chaîne de nucléotides reliés entre eux par des liaisons 3'-5' phosphodiester. Les nucléotides sont des esters phosphoriques des nucléosides, les nucléosides résultent quant à eux de la liaison d'une base azotée, purique ou pyrimidique, avec un ribose ou un désoxyribose. L'acide nucléique est un acide ribonucléique (ARN) lorsque les nucléotides constituant l'acide nucléique contiennent le ribose, et un acide désoxyribonucléique (ADN) lorsque les nucléotides constituant l'acide nucléique contiennent le désoxyribose. Les bases azotées sont de manière générale l'adénine (A), la guanine (G), l'uracile (U) et la cytosine (C) lorsque l'acide nucléique est un ARN, et l'adénine, la guanine, la thymine (T) et la cytosine lorsque l'acide nucléique est l'ADN.

Le procédé de la présente invention permet de caractériser, quantifier, cartographier les acides nucléiques ARN ou ADN, et leurs bases azotées ainsi que leurs dérivés.

Par dérivés, on entend par exemple des acides nucléiques contenant des dérivés des bases azotées précitées, appelés aussi bases anormales, par exemple la 5-hydroxyméthylcytosine, dérivée de la cytosine.

La présente invention fournit également un procédé de fabrication d'une biopuce à acides nucléiques formée notamment d'un support solide sur lequel est fixé au moins un acide nucléique synthétisé in situ, ledit procédé comprenant au moins un cycle de synthèse et d'analyse incluant notamment d'une part un couplage d'une base azotée pour la synthèse in situ dudit acide nucléique fixé sur le support, et d'autre part, une analyse destinée à contrôler le couplage de ladite base azotée, ladite analyse étant réalisée au moyen d'un procédé de caractérisation, de quantification ou de cartographie de la présente invention.

Les techniques de synthèse in situ d'acides nucléiques sont décrites notamment dans les ouvrages précités consacrés à la fabrication de biopuces par exemple dans Caruthers, Science, Octobre 1985, page 281 et suivantes. Le couplage de la base azotée correspond bien entendu à la formation de la liaison 3'-5'phosphodiester précitée entre l'acide nucléique en cours de synthèse et le nucléotide comprenant la base azotée à coupler.

Il est important de noter ici que les couches minces d'acides nucléiques sont habituellement considérées comme étant non absorbantes. Ceci est notamment décrit dans "Ellipsometric and interferometric characterization of DNA probes immobilized on a combinational assay", Gray et al., Langmuir 1997, 13, 2833-2842.

Malgré cela, les présents inventeurs se sont intéressés aux méthodes par effet mirage, appelées aussi méthodes photothermiques.

Ces méthodes ont toutes en commun l'excitation de l'échantillon dont l'absorption doit être mesurée par une source lumineuse, appelée faisceau pompe, en général un laser, modulé à une certaine fréquence. Une partie de l'énergie lumineuse incidente est absorbée par l'échantillon. La proportion d'énergie absorbée est fixée par le spectre d'absorption de l'échantillon et le spectre d'émission de la source d'excitation. Une partie de l'énergie absorbée génère un gradient de température local engendrant un gradient d'indice.

Les méthodes photothermiques consistent à détecter ce gradient d'indice.

Les inventeurs ont astucieusement mis en évidence que parmi les méthodes photothermiques, ou méthode par effet mirage, la méthode de déflexion photothermique peut par exemple être utilisée selon la présente invention.

La méthode de déflexion photothermique est une méthode qui consiste à mesurer la déviation d'un faisceau lumineux, appelé faisceau sonde, passant dans la zone où se trouve le gradient d'indice. En d'autres termes, elle consiste à mesurer la déviation du faisceau sonde due à l'échauffement d'un échantillon absorbant par l'intermédiaire du faisceau pompe. Cette technique de déflexion photothermique a été appliquée à l'analyse de surface telle que la cartographie d'absorption, l'imagerie de paramètre thermique, mais non pour caractériser, quantifier et cartographier un acide nucléique ou une base azotée d'un acide nucléique fixé(e) sur un support.

Une présentation complète, et suffisante pour réaliser la présente invention, des méthodes photothermiques peut être trouvée par exemple dans l'ouvrage "Photothermal Spectroscopy Methods for Chemical Analysis, S.E. Bialkowski, vol. 134 in Chemical Analysis : a Series of Monographs on Analytical Chemistry and its Applications, Wiley".

Dans le cas d'une méthode de déflexion photothermique, l'acide nucléique, ou la base azotée de l'acide nucléique, est donc éclairé par une lumière provenant d'une source d'excitation, et l'absorption, la déviation ou la réflexion de la lumière provenant de la source d'excitation par l'acide nucléique, ou par la base azotée, est détectée ou mesurée au moyen d'un faisceau sonde.

La figure 1 en annexe est un graphique qui représente la variation, en fonction de la longueur d'onde, du coefficient d'absorption des bases A, T, C, G et U permettant de déterminer les longueurs d'onde de mesure pour le procédé de la présente invention. Sur cette figure, l'axe des abscisses représente la longueur d'onde $\lambda$ en nm et l'ordonnée le coefficient d'absorption molaire (C.A.M.) ($x10^{-3}$). La référence 60 indique le spectre d'absorption de l'adénine (A), la référence 62 de la thymine (T), la référence 64 de la cytosine (C), la référence 66 de la guanine (G) et la référence 68 de l'uracile (U). Ces spectres permettent aussi de choisir la zone des longueurs optimales de sensibilité de l'ADN ou ARN.

Selon l'invention, la source d'excitation peut être par exemple une source cohérente ou une source incohérente.

Le rôle du faisceau pompe est défini ci-dessus. Il peut provenir par exemple d'un laser pulsé, ou d'un laser continu modulé en intensité, dont la longueur d'onde d'émission est dans la bande d'absorption des acides nucléiques. Dans le cas des acides nucléiques, les ordres de grandeurs des épaisseurs de couche sont généralement de quelques nanomètres.

Selon l'invention, le faisceau pompe peut donc être une lumière cohérente par exemple un faisceau d'un laser choisi parmi un laser argon ayant une longueur d'onde de 275 nm, ou un laser solide, par exemple YAG quadruplé, ayant une longueur d'onde de 266 nm. Selon l'invention, l'absorption peut être détectée ou mesurée dans une gamme spectrale allant de 200 à 300 nm.

Selon l'invention, le faisceau pompe peut également être une lumière incohérente, par exemple polychromatique, si le spectre d'émission de la source permet d'obtenir suffisamment de signal pour la détection. La lumière

incohérente peut par exemple provenir d'une lampe à vapeur de mercure.

Le faisceau sonde est de préférence dirigé à proximité de la portion d'échantillon éclairée par le faisceau pompe. Par ailleurs, le faisceau sonde peut être identique ou différent du faisceau pompe.

Selon l'invention, le faisceau sonde a de préférence une longueur d'onde qui n'est pas absorbée par le substrat ni les acides nucléiques en présence. Le faisceau sonde est de préférence un faisceau laser. Il peut par exemple avoir une longueur d'onde allant de 400 à 700 nm. Ceci permet de faciliter l'alignement par rapport à l'échantillon, parce que les longueurs d'onde sont dans le domaine du visible. Il peut par exemple être issu d'un laser hélium-néon à 633 nm.

La position relative des faisceaux sonde et pompe définit la configuration employée. Par exemple, le faisceau sonde peut traverser un ou plusieurs des milieux suivants : les acides nucléiques, le support solide, ou le milieu environnant, par exemple, un liquide ou de l'air. L'orientation du faisceau sonde par rapport au faisceau pompe peut être choisie à loisir, par exemple en fonction de l'encombrement mécanique et/ou pour optimiser la sensibilité en cherchant le maximum d'absorption en fonction de l'angle d'incidence.

Selon l'invention, les faisceaux sonde et pompe peuvent se croiser. La position du point de croisement éventuel peut également être fixée à loisir, notamment en fonction de la recherche de l'optimum de sensibilité. En règle générale, le point de croisement se situe dans le maximum du gradient thermique.

Selon l'invention, les faisceaux sonde et pompe peuvent être disposés dans une configuration transverse ou dans une configuration sensiblement colinéaire. Dans la configuration transverse, les faisceaux sonde et pompe se croisent et sont perpendiculaires. Cette configuration est représentée schématiquement sur la figure 2 annexée. Dans la configuration sensiblement colinéaire, les faisceaux pompe et sonde se croisent mais sont presque colinéaires. La figure 3 annexée est une représentation schématique de la configuration colinéaire.

Sur ces figures, la référence 1 indique le faisceau pompe, la référence 3 le faisceau sonde dans la configuration transverse, la référence 3 le faisceau sonde dans la configuration sensiblement colinéaire, la référence 7 un laser, la référence 9 un détecteur tel qu'un détecteur à quatre quadrants et la référence 11 l'échantillon constitué du support solide sur lequel sont fixés les acides nucléiques.

La réflexion ou la réfraction du faisceau sonde peut être détectée au moyen d'une photodiode multi-élément, par exemple d'un détecteur à deux ou quatre cadrans, d'une barrette ou d'une matrice, ou à l'aide d'une photodiode simple, soit partiellement recouverte par un cache ou couteau, soit ne recevant qu'une partie du faisceau sonde.

Dans le cas d'une photodiode simple, un autre détecteur peut être nécessaire, afin de dissocier les variations d'absorption des acides nucléiques des variations éventuelles de puissance du faisceau pompe.

La figure 4 est une illustration schématique de différentes configurations de détection de la déviation du faisceau sonde. Sur cette figure, -A- représente schématiquement un détecteur 13 bi-quadrant et un spot 15 formé par le faisceau sonde sur le détecteur, -B-représente un détecteur 4 quadrants, -C- représente un détecteur matriciel, -D- représente une photodiode simple partiellement recouverte d'un cache 17, et -E-représente un photodétecteur désaxé.

Pour obtenir une sensibilité suffisante, la déflexion du faisceau sonde induite par l'acide nucléique ou la base azotée de l'acide nucléique, est de préférence distinguée des variations parasites dues à l'environnement, telles que les variations de température du laboratoire. Pour cela, le faisceau pompe peut être marqué temporellement, soit par une modulation s'il est continu, soit par son fonctionnement impulsionnel. La maîtrise de la fréquence de modulation ou de la possibilité d'obtenir un signal de référence permet de détecter préférentiellement la réflexion due à l'échauffement engendré par l'absorption partielle du faisceau pompe.

Quelle que soit la configuration des faisceaux utilisés, l'information obtenue est locale et concerne une zone autour du point d'impact du faisceau pompe sur les oligonucléotides ou la base azotée.

La taille de cette zone peut être fixée par les paramètres expérimentaux tels que la dimension du faisceau pompe au niveau du point d'impact sur l'échantillon ou sa fréquence de modulation, et par le comportement thermique du support, de l'échantillon et du milieu ambiant. Ceci est dû notamment à la diffusion de la chaleur dans ces différents milieux.

L'information étant locale, l'appareil de détection peut être couplé à un système de déplacement du support sur lequel sont fixés les acides nucléiques relativement au faisceau pompe. L'ensemble permet alors de comparer les valeurs de déviation du faisceau sonde d'un point à l'autre du support, en particulier le signal peut être représenté sous forme de cartographie.

Lorsque cela est nécessaire, le signal de déviation peut être converti en valeur d'absorption par exemple par l'intermédiaire d'un échantillon de référence ou échantillon témoin. Cet échantillon témoin, dont l'absorption est connue et stable, peut faire l'objet d'une mesure de déflexion photothermique dans les mêmes conditions expérimentales que pour les acides nucléiques ou les bases azotées. La valeur obtenue permet par exemple de calculer un coefficient de conversion du signal électrique mesuré en niveau d'absorption.

La modélisation de l'interaction du faisceau sonde avec le faisceau pompe montre que l'on peut mesurer les pertes par absorption de l'échantillon. Comme nous l'avons vu précédemment, l'étalonnage de l'appareil peut être réalisé en mesurant le signal de déflexion d'un échantillon de référence dont l'absorption est a priori connue. Dans le cas où les absorptions sont faibles, on montre que le signal de déflexion photothermique est proportionnel à l'absorption de

l'échantillon On peut donc travailler de manière relative par rapport à l'échantillon de référence.

Avec le procédé de la présente invention, on peut mesurer des pertes par absorption de quelques ppm ($10^{-6}$). On entend par le terme "pertes", le rapport entre la puissance absorbée dans le matériau et la puissance lumineuse incidente. Un mode avantageux de la présente invention peut consister à exploiter l'absorption du faisceau pompe en polarisation P, c'est-à-dire parallèle au plan d'incidence des oligonucléotides afin d'optimiser la sensibilité de détection. En effet, dans certains cas, l'absorption en polarisation P passe par un maximum à l'angle de Brewster du substrat, par exemple 56,6° pour le verre.

Chaque base a un spectre d'absorption spécifique qui peut être exploité. Selon la présente invention, nous suivons l'évolution du signal de photodéflexion en fonction du nombre de base.

Au premier ordre, le coefficient d'absorption d'une couche élémentaire s'écrit :

$$A=\alpha e=(4\pi k/\lambda).e$$

dans laquelle A désigne l'absorption d'une couche élémentaire, $\alpha$ désigne le coefficient d'absorption, e désigne l'épaisseur mécanique, k désigne le coefficient d'extinction de la couche mince et $\lambda$ la longueur d'onde du faisceau pompe.

Après la croissance de N bases i, nous aurons simplement :

$$A = \sum_{i=i}^{i=N} \alpha_i e_i = \sum_{i=1}^{i=N} (4\pi k_i / \lambda).e_i$$

Dans le domaine de la biologie, on peut également exprimer ce coefficient sous la forme suivante :

$$A = \sum_{i=1}^{i=N} \ln 10 \varepsilon_i c_i$$

$\varepsilon_i$ et $c_i$ désignent respectivement le coefficient d'extinction molaire ($1.mol^{-1}.cm^{-1}$) et la concentration ($mol.l^{-1}$) pour chaque base.

A titre indicatif, les coefficients d'extinction de l'ordre de $10^{-2}$ à $10^{-3}$, et les absorptions mesurables sont de l'ordre de quelques centaines de ppm. Il s'agit donc de signaux optiques faibles.

Les étapes i interviennent au premier ordre de manière additive sur les étapes précédentes. Le signal est donc simple à interpréter et permet de suivre l'évolution de la croissance des bases avec les étapes de synthèse in situ des oligonucléotides.

Selon l'invention, le support peut être par exemple un support de verre, de silicium oxydé, de plastique ou un gel. Ce support peut être par exemple un support plan ou présentant des micro-cavités par exemple des microcuvettes.

Selon l'invention, le premier nucléotide peut être fixé sur le support pour la synthèse in situ par des réactions classiques de chimie, choisies d'une part suivant le support et d'autre part de manière à fixer le nucléotide sur le support de préférence par liaison covalente. Ces réactions chimiques sont par exemple décrites dans Chemistry Letters, 1998, p. 257-258 et Analytical Biochemistry 247, p. 96-101, 1997.

La présente demande fournit également un dispositif pour la mise en oeuvre du procédé de la présente invention, en particulier lorsque la méthode est une méthode de déflexion photothermique.

Le dispositif comprend les éléments suivants :

- un moyen de positionnement de l'échantillon comprenant un support sur lequel sont fixés les acides nucléiques,
- un moyen d'éclairage de l'échantillon,
- un moyen de détection et/ou de mesure de l'absorption, de la déviation ou de la réflexion de la lumière par l'échantillon lorsqu'il est éclairé par ledit moyen d'éclairage, et
- un moyen de positionnement dudit moyen d'éclairage et dudit moyen de détection et/ou de mesure.

Le moyen de positionnement de l'échantillon peut être tout moyen connu de déplacement précis de l'échantillon par exemple des platines de translation et de rotation micrométriques par exemple de la marque de commerce Micro-Contrôle ou de la marque de commerce Spinder Hoyer. Ces moyens peuvent être motorisés afin de permettre une automatisation notamment pour une cartographie.

Les moyens d'éclairage et de détection de l'absorption de la lumière par l'échantillon peuvent être choisis notamment en fonction du support et des acides nucléiques à détecter. Le moyen d'éclairage de l'échantillon peut être par exemple un faisceau pompe tel qu'il est défini précédemment. Le moyen de détection de l'absorption peut comprendre un faisceau sonde et des moyens de détection de la réfraction ou de la réflexion d'un faisceau sonde. Ces moyens sont décrits ci-dessous et dans les exemples suivants.

Les moyens de positionnement des moyens d'éclairage et de détection précités peuvent être des moyens tels que ceux précités pour le positionnement de l'échantillon.

L'originalité de l'invention repose donc notamment sur le fait que jamais une technique photothermique n'a été utilisée pour caractériser, quantifier et cartographier une base azotée, un acide nucléique ou une base azotée d'un acide nucléique fixé(e) sur un support. Plus généralement, aucune méthode basée sur la mesure de variation d'absorption n'a été utilisée pour ce type d'analyse sur support.

Le procédé de la présente invention présente notamment l'avantage de ne nécessiter aucune étape de marquage ni marqueur. Il peut être utilisé par exemple avantageusement pour la fabrication de biopuces à acides nucléiques. La caractérisation, quantification et cartographie de chaque base azotée, par exemple à chaque étape de synthèse in situ d'une biopuce à ADN ou à ARN, permet de suivre avec précision chaque étape de ladite synthèse, et par conséquent, de contrôler la densité, l'uniformité de la densité et la qualité de la biopuce fabriquée et éventuellement de rectifier les erreurs au cours de la synthèse.

Ceci n'était pas possible avec les techniques de l'art antérieur. Les biopuces obtenues grâce au procédé de la présente invention sont précises, homogènes et facilement reproductibles.

Le procédé de la présente invention permet d'optimiser le procédé de synthèse in situ d'oligonucléotides pour la fabrication de biopuces et d'obtenir un rendement de couplage proche de, ou allant jusqu'à, 100%. Cette utilisation sera illustrée dans les exemples ci-dessous.

D'autres éléments de l'invention et avantages apparaîtront encore à la lecture de la description et des exemples qui suivent en référence aux dessins en annexe, donnés bien entendu à titre illustratif et non limitatif.

## Brève description des figures

- la figure 1 est un graphique qui représente la variation, en fonction de la longueur d'onde, du coefficient d'absorption molaire des bases azotées G, C, T et A ;
- la figure 2 est un schéma illustrant une déflexion photothermique en configuration transverse pour l'analyse d'un échantillon à tester selon le procédé de la présente invention ;
- la figure 3 est un schéma illustrant une déflexion photothermique en configuration longitudinale pour l'analyse d'un échantillon à tester selon le procédé de la présente invention ;
- la figure 4 est une illustration schématique de différentes configurations de détection de la déviation du faisceau sonde;
- la figure 5 est une illustration schématique d'une mesure de l'absorption d'un échantillon par la méthode de déflexion photothermique en configuration transverse selon l'invention ;
- la figure 6 est un schéma illustrant un dispositif pour la mise en oeuvre du procédé de la présente invention ;
- les figures 7 et 8 montrent schématiquement le mode de détermination de l'"image" après chaque étape de synthèse d'une sonde selon le procédé de la présente invention ;
- la figure 9 représente l'évolution temporelle des signaux photothermiques obtenus sur des substrats de silice selon la présente invention.

## Exemples

### Exemple 1 : <u>méthode de mesure</u>

Le système utilisé dans cet exemple, selon l'invention est basé sur la déflexion photothermique en configuration transverse.

La figure 5 en annexe est une illustration schématique de principe d'une mesure de l'absorption d'un échantillon constitué d'un acide nucléique ou d'une base azotée d'un acide nucléique fixé(e) sur un support par la méthode de déflexion photothermique selon l'invention.

Sur cette figure, le faisceau pompe 19 est issu d'un laser argon continu à 275 nm (COHERENT INOVA 40 (marque de commerce) (non représenté), il est focalisé sur l'échantillon 11 à l'aide d'un miroir sphérique (non représenté), le diamètre du spot (non représenté) est d'environ 70 microns à la surface de l'échantillon 11. La longueur d'onde du faisceau pompe est choisie de manière à permettre la détection des acides nucléiques. La puissance du faisceau pompe

est de 300 mW en sortie du laser.

Le faisceau sonde 21 est celui d'un laser hélium-néon à 633 nm. La longueur d'onde de ce faisceau sonde est indifférente. Selon l'invention, une longueur d'onde éloignée de celle du faisceau pompe permet d'obtenir un meilleur rapport signal sur bruit.

La détection de la déflexion du faisceau sonde 21 est effectuée à l'aide d'un détecteur quatre quadrants -B- (voir figure 3) suivi d'une électronique d'amplification et de soustraction (non représentée).La référence 21a indique le faisceau sonde dévié par déflexion photothermique. L'angle θ indique l'angle d'incidence du faisceau pompe 19 par rapport à la normale 20 à l'échantillon (indiquée en trait mixte), et la référence 19a le faisceau pompe 19 réfléchi sur l'échantillon.

Un filtre interférentiel (non représenté) sélectionnant la longueur d'onde du faisceau sonde peut être placé devant le détecteur quatre quadrants afin d'éviter l'influence d'une lumière parasite provenant du faisceau pompe modulé.

Dans le dispositif de la présente demande, le laser sonde, le détecteur quatre quadrants et l'électronique associée peut faire partie intégrante d'une cellule de mesure commerciale par exemple celle de la société ALIS. Le signal issu de cette cellule est envoyé vers une détection synchrone.

Le faisceau pompe peut être modulé grâce à un disque à fente mécanique, appelé aussi ci-après chopper mécanique, dont la fréquence est réglable. Le signal de commande du chopper sert de référence à la détection synchrone. La fréquence est de 157 Hz. Le signal mesuré est obtenu à la sortie de la détection synchrone (amplitude du signal de déviation à la fréquence de modulation du faisceau pompe).

Le positionnement de l'échantillon et des deux faisceaux les uns par rapport aux autres est assuré par des platines de translation et de rotation micrométriques (marque de commerce Micro-Contrôle de la société) dont certaines sont motorisées afin de permettre une automatisation pour une cartographie, par exemple d'une biopuce, et dans certaines phases du réglage. Les réglages sont effectués automatiquement afin de maximiser le signal de déflexion dans un plan orthogonal à l'échantillon contenant le faisceau sonde. Lors des cartographies, si cela est nécessaire, un déplacement correctif est effectué dans une direction orthogonale aux axes de balayage de la cartographie afin de garantir la conservation d'un positionnement relatif correct au cours de la cartographie. Ce déplacement correctif est déterminé automatiquement dans une étape préliminaire de mesure. L'angle d'incidence du faisceau pompe par rapport à la normale à l'échantillon, et l'orientation de la cellule par rapport à l'échantillon, peuvent être réglables. Les positions et orientations relatives des faisceaux sonde et pompe peuvent être également réglables indépendamment.

Un schéma d'un dispositif pour la mise en oeuvre de l'invention est représenté sur la figure 6 annexée. Sur cette figure, un obturateur, non représenté sur le schéma, permet de couper le faisceau pompe pendant les phases de déplacement et de le rétablir pendant un laps de temps bien déterminé après un temps d'attente choisi pour permettre la stabilisation du montage après un déplacement. La référence 23 indique un laser argon à 275 nm, la référence 25 des miroirs de positionnement du faisceau laser, la référence 27 indique un chopper mécanique, la référence 29 le faisceau laser après son passage à travers le chopper, la référence 31 un miroir de focalisation et la référence 35 l'échantillon de mesure, la référence 36 le faisceau hélium-néon sonde et la référence 37 la photodiode à quatre quadrants.

La répétabilité du positionnement de l'échantillon peut être assurée par exemple par une lunette autocollimatrice qui n'est pas représentée sur le schéma. L'ensemble du dispositif de mesure peut être piloté par une station de travail, qui commande les déplacements et fait l'acquisition des signaux de déviation dans deux directions orthogonales.

Dans ce mode de réalisation, la déviation est mesurée suivant une direction parallèle au plan de l'échantillon et suivant une direction orthogonale à celui-ci. C'est cette dernière qui constitue le signal utile. Le signal électronique fourni par la détection synchrone peut être utilisé tel quel par comparaison d'un point à un autre de l'échantillon.

On peut également le convertir en valeur d'absorption en effectuant une mesure de référence sur un échantillon réputé stable dans le temps et sous flux laser, dont l'absorption est mesurable au spectrophotomètre et se situe dans la gamme de linéarité du banc de mesure de déflexion photothermique.

**Exemple 2 : <u>Synthèse in situ d'oligonucléotides sur substrat de silice</u>**

Les substrats de silice utilisés sont de type Suprasil (Société SESO) et présentent un diamètre de 50 mm et une épaisseur de 3 mm.

1 - <u>Hydroxylation de surface</u>

Une solution contenant 2 g de soude NaOH/6 ml d'eau désionisée/8 ml d'éthanol à 95% est préparée et les substrats sont mis en incubation dans celle-ci pendant 2 heures. Les échantillons sont ensuite rincés à l'eau désionisée et séchés avec une soufflette à azote. Cette étape permet la création de groupements hydroxyles en surface de la silice (voir formule (I) ci-dessous).

2 - Silanisation

2 ml de 3-glucydoxypropyltriméthoxy silane (98%) est mis en solution dans 7 ml de toluène et 0,6 ml de triéthylamine. Les échantillons sont mis dans cette solution pendant une nuit à 80°C. Ils sont ensuite séchés à l'acétone et à l'azote à l'aide d'une soufflette et recuits à 110°C pendant 3 heures. La réaction chimique de silanisation peut être schématisée de la manière suivante :

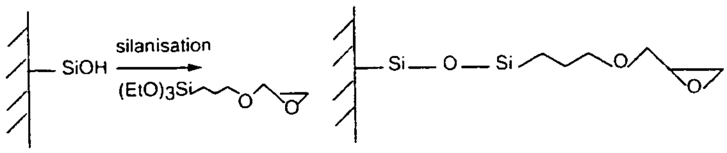


3 - Ouverture de la fonction époxyde

Une solution contenant 30 ml d'hexaéthylèneglycol et 18 µl d'acide sulfurique est utilisée pour permettre l'ouverture de la liaison époxyde et ainsi la fixation de l'hexaéthylène glycol. L'ouverture de la fonction époxyde peut être schématisée de la manière suivante :

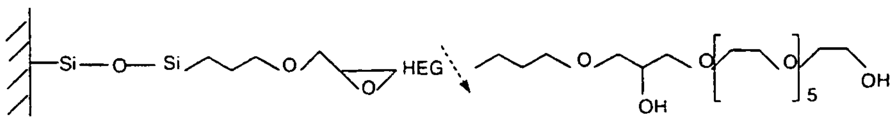


4 - Synthèse d'oligonucléotides

La synthèse d'oligonucléotides par voie phosphoramidite est décrite dans le document Caruthers, Sciences, Octobre 1985, page 281. Elle comporte les étapes:

de détrytilation, de couplage, d'acétylation, et d'oxydation.

Détritylation :

L'échantillon est mis dans 2 ml d'une solution contenant 3% d'acide trichloracétique dans du dichlorométhane (DMT Removal lot 2257-1 de Roth), pendant 2 minutes sous agitation. Il est ensuite rincé dans du dichlorométhane puis dans de l'acétonitrile et séché par jet d'azote sous pression.

Couplage :

2 ml d'une solution contenant 25 mg de 2'-deoxy-5'-O-diméthoxytrityl-3'-O-(βcyanoéthyl N,N-diisopropyl amino) phosphoramidite sont mélangés à 150 µl de tétrazole. L'échantillon est mis dans cette solution sous agitation sous argon pendant 10 minutes. Il est ensuite rincé dans de l'acétonitrile et séché par jet d'azote sous pression.

Capping :

Une solution contenant 1 1 de CAP1 et 1 ml de CAP2 est préparée (CAP1 : anhydride acétique/lutidine/THF, CAP2 : 1-méthylimidazole/THF). L'échantillon est mis dans cette solution pendant 2 minutes. Il est ensuite rincé dans de l'acétonitrile et séché par jet d'azote sous pression.

Oxydation :

L'échantillon est mis dans une solution de 4 ml d'Oxydation Reagent (iode/eau/pyridine/THF lot 2254.2 de

Roth) sous agitation pendant 1 minute. Il est ensuite rincé dans de l'acétonitrile dans du dichlorométhane puis dans de l'acétonitrile, et séché par jet d'azote sous pression.

Ces étapes sont reproduites N fois, N étant le nombre de mères de l'oligonucléotide à synthétiser. C'est l'étape de couplage qui détermine la nature de la base de chaque nucléotide (A, C, G, T ou U).

**Exemple 3 : mesure d'absorption d'oligomères de longueurs différentes** :

Cet exemple a été réalisé sur des supports de silice préparés comme dans l'exemple 2, d'épaisseur comportant 1mère, 2mères et 8mères et de séquences constituées uniquement de bases T.

Le but de cet exemple est de montrer que le procédé de la présente invention permet de différencier la croissance d'un oligonucléotide base par base.

Nous avons réalisé quatre échantillons différents nommés Ech.1 à Ech.4 avec les méthodes décrites précédemment. Ces échantillons sont les suivants :

Ech.1 : silice/traitement NaOH/ silanisation/HEG,
Ech.2 : silice / traitement NaOH/silanisation/ HEG/synthèse d'un monomère comportant une une base T,
Ech.3 : silice/traitement NaOH/silanisation/ HEG/synthèse d'un dimère comportant une base T sur chaque nucléotide,
Ech.4 : silice/traitement NaOH/silanisation/ HEG/synthèse d'un octamère comportant une base T sur chaque nucléotide.

1) Paramètres de mesures :

Les mesures ont été faites au moyen d'un laser argon.

Longueur d'onde 275 mm ; 140 mW de puissance échantillon ; fréquence de choppage F = 157 Hz ; angle d'incidence 45° ; détection sur deux quadrants.

2) Mesure :

cartographies sur 1 $mm^2$ au centre des échantillons par pas de 0,1 mm.

Pour chaque point X, Y, acquisition de Absorption=f(t), avec 0≤t≤4 secondes par pas temporel de 100 ms environ. L'acquisition se déroule comme suit :

- pour 0≤t<1 seconde par d'effet mirage : l'obturateur est fermé,
- à t=1 seconde, ouverture de l'obturateur,
- pour 1≤t≤4 secondes : mesure de l'absorption.

Les résultats sont donnés dans le tableau I suivant :

Tableau I

| **Valeur de l'absorption maximum (Amax) pour chaque échantillon** | | |
|---|---|---|
| Echantillon n° | Nature de l'échantillon | Amax à 275 nm |
| Ech.1 | silane + HEG | 225 ua |
| Ech.2 | silane + HEG + oligo 1T | 280 ua |
| Ech.3 | silane + HEG + oligo 2T | 360 ua |
| Ech.4 | silane + HEG + oligo 8T | 730 ua |
| avec ua : unités d'absorption. | | |

La figure 9 annexée représente l'évolution des signaux photothermiques en fonction du temps obtenus sur des substrats de silice comportant de l'hexaéthylène glycol (HEG), un monomère avec une base T (HEG+T), un dimère avec deux bases T (HEG+2T), et un octomère avec huit bases T (HEG+8T).

Ces courbes représentent respectivement la référence (pas de base azotée), le signal pour une base T, deux bases T et huit bases T.

**Exemple 4 : détermination d'une image de chaque étape de synthèse d'un oligonucléotide**

La détermination de l'"image" de chaque étape de synthèse se fait par comparaison avec les étapes précédentes. Des structures de tests sont données schématiquement sur les figures 7 et 8 annexées. Sur ces figures, les structures de tests sont schématisées par les carrés, ou plots, correspondant à des zones par exemple de 100x100 $\mu m^2$ dans lesquelles la réponse optique sera mesurée pour le substrat (ref) les quatre bases greffées séparément sur les substrats (A, C, G et T), les dimères greffés correspondant aux différents arrangements possibles dans l'oligonucléotide final (AT, AC, ..., TT).

Grâce à ces plots de référence, nous avons mesuré pour chaque base la signature de son absorption pour la ou les longueurs d'onde de mesure. Avec ces mesures d'absorption, on a pu vérifier le nombre de bases G, C, T, A présentes dans la sonde d'oligonucléotide grâce aux simples soustractions montrées sur la figure 7.

Comme illustré sur la figure 8, par soustractions successives, le signal de chaque base a pu être calculé quel que soit son environnement. Ainsi, dans la première ligne, référencée 80, on a pu déterminer les signaux de A par rapport à A, C, G et T respectivement, dans la deuxième ligne, référencée 82, on a pu déterminer les signaux de C par rapport à A, C, G et T respectivement, dans la troisième ligne, référencée 84, on a pu déterminer les signaux de G par rapport à A, C, G et T respectivement et dans la quatrième ligne, référencée 86, on a pu déterminer les signaux de T par rapport à A, C, G et T respectivement.

**Exemple 5 : procédé de synthèse d'une biopuce selon l'invention**

Comme exposé dans la description et les exemples précédents, la présente invention propose un procédé qui permet d'analyser chaque étape de couplage dans la synthèse in situ d'oligonucléotides sur substrats structurés.

L'analyse est non-destructrice.

Toutefois, au-delà d'une certaine densité de puissance envoyée sur l'échantillon, les inventeurs ont constaté que l'échantillon pourrait être abîmé de l'ordre de 1 $kW/cm^2$.

## Revendications

1. Procédé de caractérisation d'une base azotée, d'un acide nucléique, ou d'une base azotée d'un acide nucléique, fixé(e) sur un support, ledit procédé consistant à caractériser ledit acide nucléique ou ladite base azotée sans marquage par une méthode par effet mirage.

2. Procédé de quantification d'une base azotée, d'un acide nucléique, ou d'une base azotée d'un acide nucléique, fixé(e) sur un support, ledit procédé consistant à quantifier ledit acide nucléique ou ladite base azotée sans marquage par une méthode par effet mirage.

3. Procédé de cartographie de bases azotées, d'acides nucléiques, ou de bases azotées d'acides nucléiques, fixés(es) sur un support, ledit procédé consistant à cartographier lesdits acides nucléiques ou lesdites bases azotées sans marquage par une méthode par effet mirage.

4. Procédé de fabrication d'une biopuce à acides nucléiques formée notamment d'un support sur lequel est fixé au moins un acide nucléique synthétisé in situ, ledit procédé comprenant au moins un cycle de synthèse et d'analyse incluant notamment d'une part un couplage d'une base azotée pour la synthèse in situ dudit acide nucléique fixé sur le support, et d'autre part, une analyse destinée à contrôler le couplage de ladite base azotée, ladite analyse étant réalisée au moyen d'un procédé de caractérisation selon la revendication 1, de quantification selon la revendication 2, ou de cartographie selon la revendication 3.

5. Procédé selon l'une quelconque des revendications 1 à 4, dans lequel la méthode par effet mirage est une méthode de déflexion photothermique.

6. Procédé selon la revendication 5, dans lequel la base azotée, l'acide nucléique, ou la base azotée de l'acide nucléique, est éclairé par un faisceau pompe provenant d'une source d'excitation, et l'absorption, la déviation ou la réflexion de la lumière provenant de la source d'excitation par l'acide nucléique, ou par la base azotée, est détectée ou mesurée au moyen d'un faisceau sonde.

7. Procédé selon la revendication 6, dans lequel le faisceau pompe est une lumière cohérente.

**8.** Procédé selon la revendication 7, dans lequel les faisceaux sonde et pompe se croisent.

**9.** Procédé selon la revendication 6 ou 7, dans lequel les faisceaux sonde et pompe sont en configuration transverse ou colinéaire.

**10.** Procédé selon la revendication 6, dans lequel l'absorption est détectée ou mesurée dans une gamme spectrale allant de 200 à 300 nm.

**11.** Procédé selon la revendication 7, dans lequel le faisceau pompe est choisi parmi un laser argon ayant une longueur d'onde de 275 nm, ou un laser solide ayant une longueur d'onde de 266 nm.

**12.** Procédé selon la revendication 6, dans lequel la source d'excitation est une source incohérente.

**13.** Procédé selon l'une quelconque des revendications 1 à 4, dans lequel respectivement, la caractérisation, la quantification, la cartographie, ou l'analyse est réalisée en polarisation du ou des acides nucléiques présents sur le support.

## Claims

**1.** Characterisation process for a nitrogenous base, a nucleic acid, or a nitrogenous base of a nucleic acid, fixed on a support, said process consisting in characterising said nucleic acid or said nitrogenous base without marking by a mirage effect method.

**2.** Quantification process for a nitrogenous base, a nucleic acid, or a nitrogenous base of a nucleic acid, fixed on a support, said process consisting in quantifying said nucleic acid or said nitrogenous base without marking by a mirage effect method.

**3.** Mapping process for nitrogenous bases, nucleic acids, or nitrogenous bases of nucleic acids, fixed on a support, said process consisting in mapping said nucleic acids or said nitrogenous bases without marking by a mirage effect method.

**4.** Process for manufacturing a nucleic acid biochip formed particularly of a support on which at least one nucleic acid synthesised in situ is fixed, said process comprising at least one synthesis and analysis cycle, particularly including firstly coupling of a nitrogenous base for in situ synthesis of said nucleic acid fixed on the support, and secondly an analysis intended to check the coupling of said nitrogenous base, said analysis being done using a characterisation process according to claim 1, quantification process according to claim 2, or a mapping process according to claim 3.

**5.** Process according to any one of claims 1 to 4, in which the mirage effect method is a photothermal deflection method.

**6.** Process according claim 5, in which the nitrogenous base, the nucleic acid or the nitrogenous base of the nucleic acid is illuminated by a pump beam originating from an excitation source, and absorption, deviation or reflection of light originating from the excitation source by nucleic acid, or by the nitrogenous base, is detected or measured using a probe beam.

**7.** Process according to claim 6, in which the pump beam is coherent light.

**8.** Process according to claim 7, in which the probe and pump beams intersect.

**9.** Process according to claim 6 or 7, in which the probe and pump beams are in transverse or collinear configuration.

**10.** Process according to claim 6, in which absorption is detected or measured in a spectral range between 200 and 300 nm.

**11.** Process according to claim 7, in which the pump beam is chosen among an argon laser with a wavelength of 275 nm, or a solid laser with a wavelength of 266 nm.

**12.** Process according to claim 6, in which the excitation source is an incoherent source.

**13.** Process according to any one of claims 1 to 4, in which the characterisation, quantification, mapping or analysis is done in polarisation of the nucleic acid(s) present on the support.

**Patentansprüche**

**1.** Verfahren zum Nachweis einer auf einem Träger fixierten Stickstoffbase, einer Nucleinsäure oder einer Stickstoffbase einer Nucleinsäure, wobei das Verfahren aus dem Nachweisen der Nucleinsäure oder der Stickstoffbase ohne Markierung durch ein Luftspiegelungeffekt-Verfahren besteht.

**2.** Verfahren zur mengenmäßigen Bestimmung einer auf einem Träger fixierten Stickstoffbase, einer Nucleinsäure oder einer Stickstoffbase einer Nucleinsäure, wobei das Verfahren aus dem mengenmäßigen Bestimmen der Nucleinsäure oder der Stickstoffbase ohne Markierung durch ein Luftspiegelungeffekt-Verfahren besteht.

**3.** Verfahren zur Kartierung von auf einem Träger fixierten Stickstoffbasen, Nucleinsäuren oder Stickstoffbasen von Nucleinsäuren, wobei das Verfahren aus dem Kartieren der Nucleinsäuren oder der Stickstoffbasen ohne Markierung durch ein Luftspiegelungeffekt-Verfahren besteht.

**4.** Verfahren zur Herstellung eines Biochips aus Nucleinsäuren, der insbesondere aus einem Träger gebildet wird, auf dem wenigstens eine in situ synthetisierte Nucleinsäure fixiert ist, wobei das Verfahren wenigstens einen Synthese- und Analysezyklus umfasst, der insbesondere einerseits eine Kupplung einer Stickstoffbase zur Synthese der auf dem Träger fixierten Nucleinsäure in situ und andererseits eine zum Kontrollieren der Kupplung der Stickstoffbase bestimmte Analyse einschließt, wobei die Analyse mittels eines Verfahrens zum Nachweis gemäß Anspruch 1, zur mengenmäßigen Bestimmung gemäß Anspruch 2 oder Kartierung gemäß Anspruch 3 durchgeführt wird.

**5.** Verfahren gemäß einem der Ansprüche 1 bis 4, wobei das Spiegeleffektverfahren ein photothermisches Deflexionsverfahren ist.

**6.** Verfahren gemäß Anspruch 5, wobei die Stickstoffbase, die Nucleinsäure oder die Stickstoffbase der Nucleinsäure durch einen aus einer Anregungsquelle stammenden Anregungsstrahl bestrahlt wird und die Absorption, die Ablenkung oder die Reflexion des aus der Anregungsquelle stammenden Lichts durch die Nucleinsäure oder durch die Stickstoffbase mittels eines Sondenstrahls nachgewiesen oder gemessen wird.

**7.** Verfahren gemäß Anspruch 6, wobei der Anregungsstrahl kohärentes Licht ist.

**8.** Verfahren gemäß Anspruch 7, wobei sich Sonden- und Anregungsstrahl kreuzen.

**9.** Verfahren gemäß Anspruch 6 oder 7, wobei Sonden- und Anregungsstrahl transversal oder kollinear angeordnet sind.

**10.** Verfahren gemäß Anspruch 6, wobei die Absorption in einem Spektralbereich von 200 bis 300 nm nachgewiesen oder gemessen wird.

**11.** Verfahren gemäß Anspruch 7, wobei der Anregungsstrahl aus einem Argonlaser mit einer Wellenlänge von 275 nm oder einem Festkörperlaser mit einer Wellenlänge von 266 nm ausgewählt ist.

**12.** Verfahren gemäß Anspruch 6, wobei die Anregungsquelle eine inkohärente Quelle ist.

**13.** Verfahren gemäß einem der Ansprüche 1 bis 4, wobei der Nachweis, die mengenmäßige Bestimmung, die Kartierung beziehungsweise die Analyse bei Polarisation der auf dem Träger vorhandenen Nucleinsäure oder -säuren durchgeführt wird.

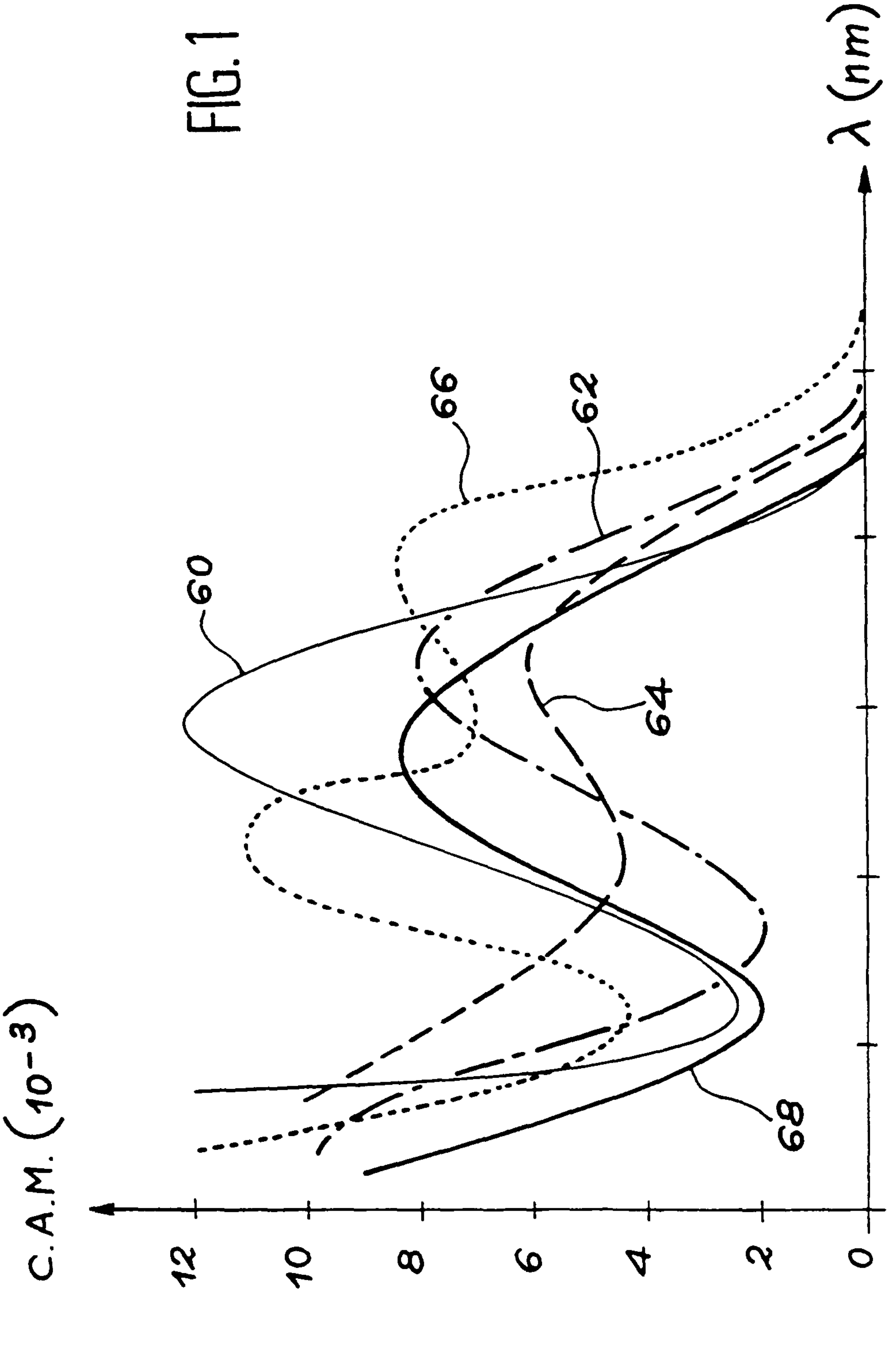


FIG. 1

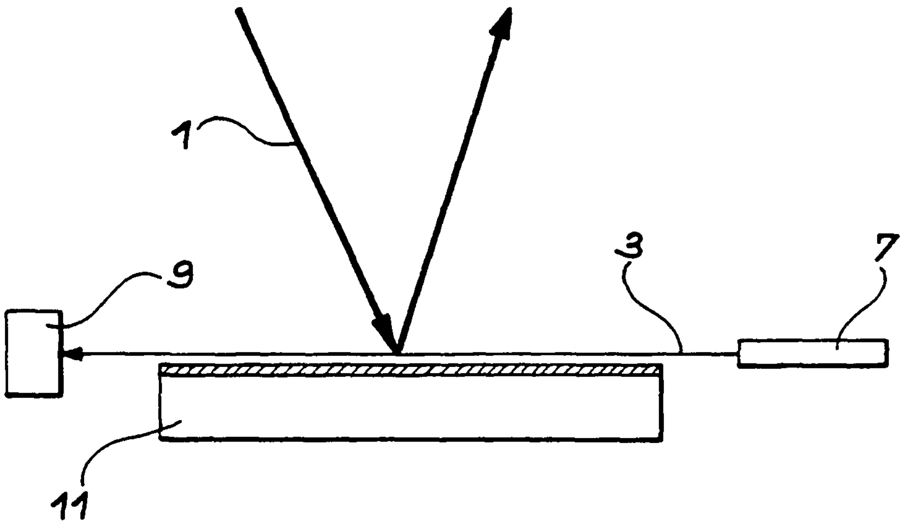


FIG. 2

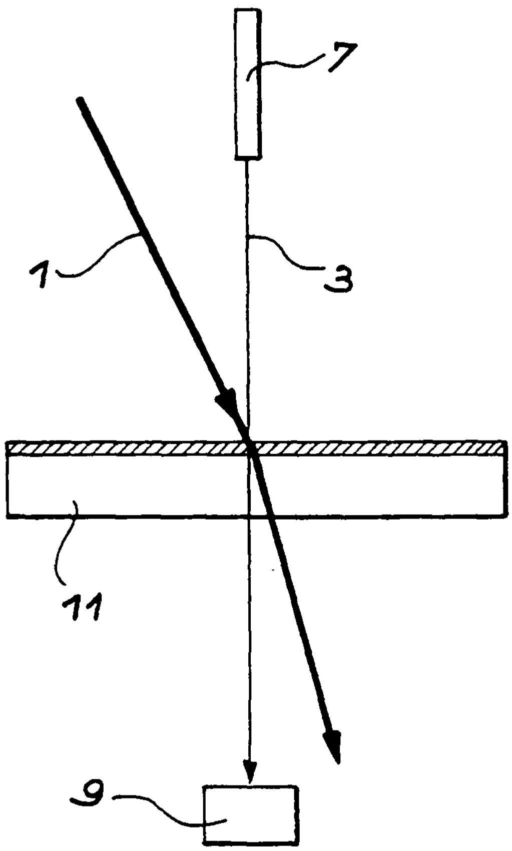


FIG. 3

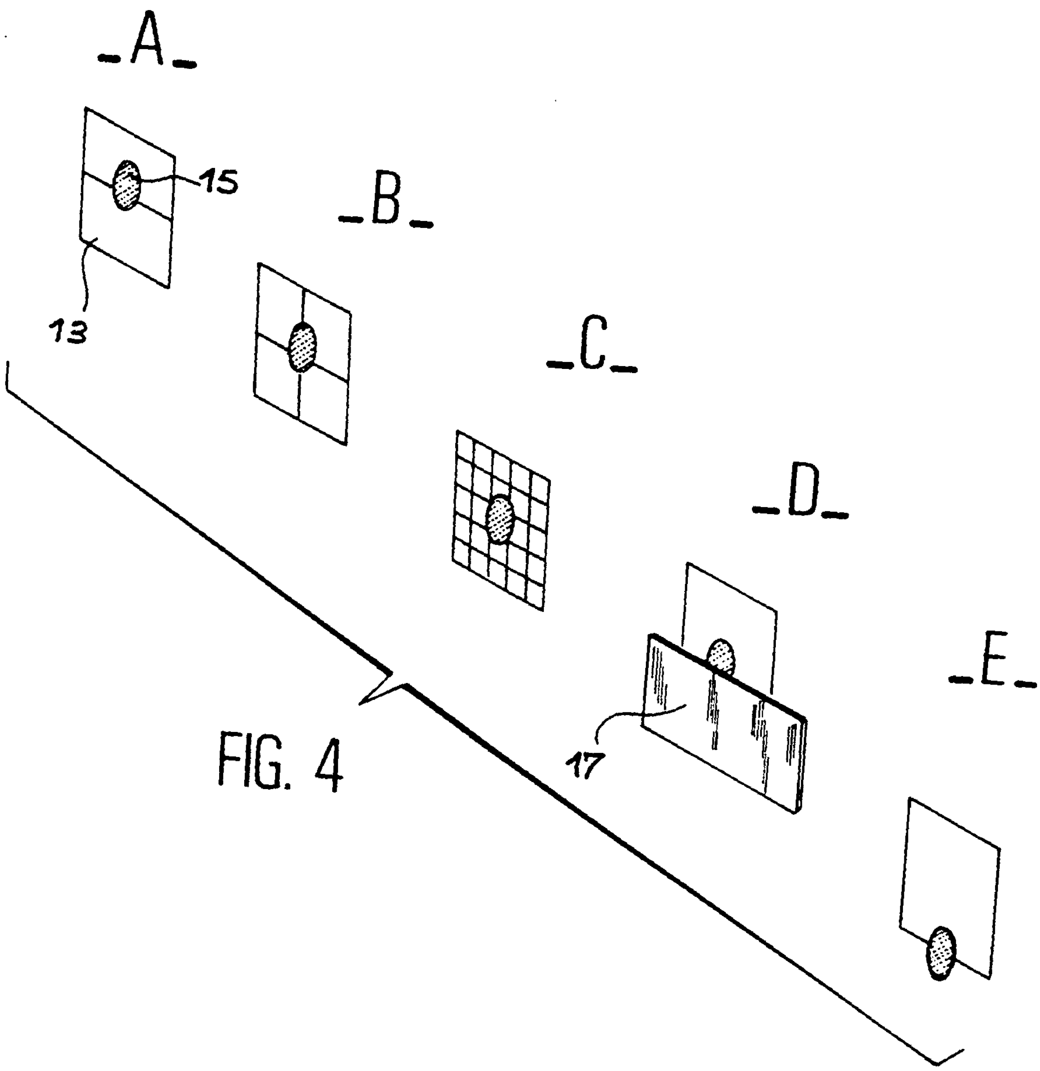


FIG. 4

FIG. 5

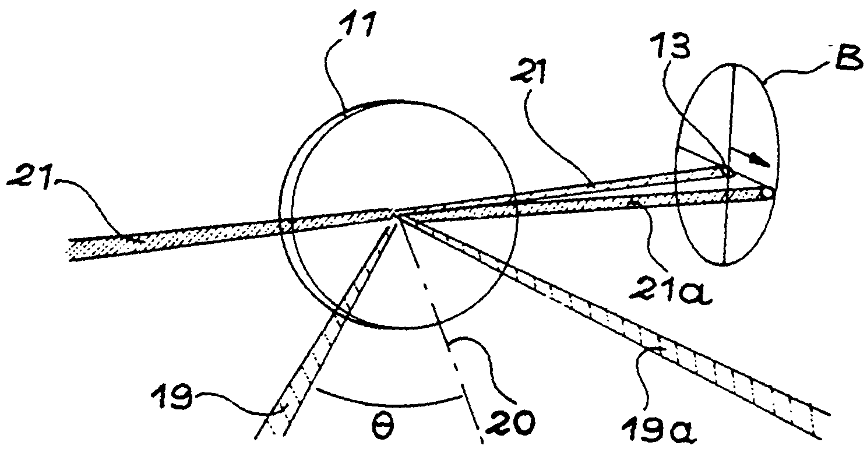

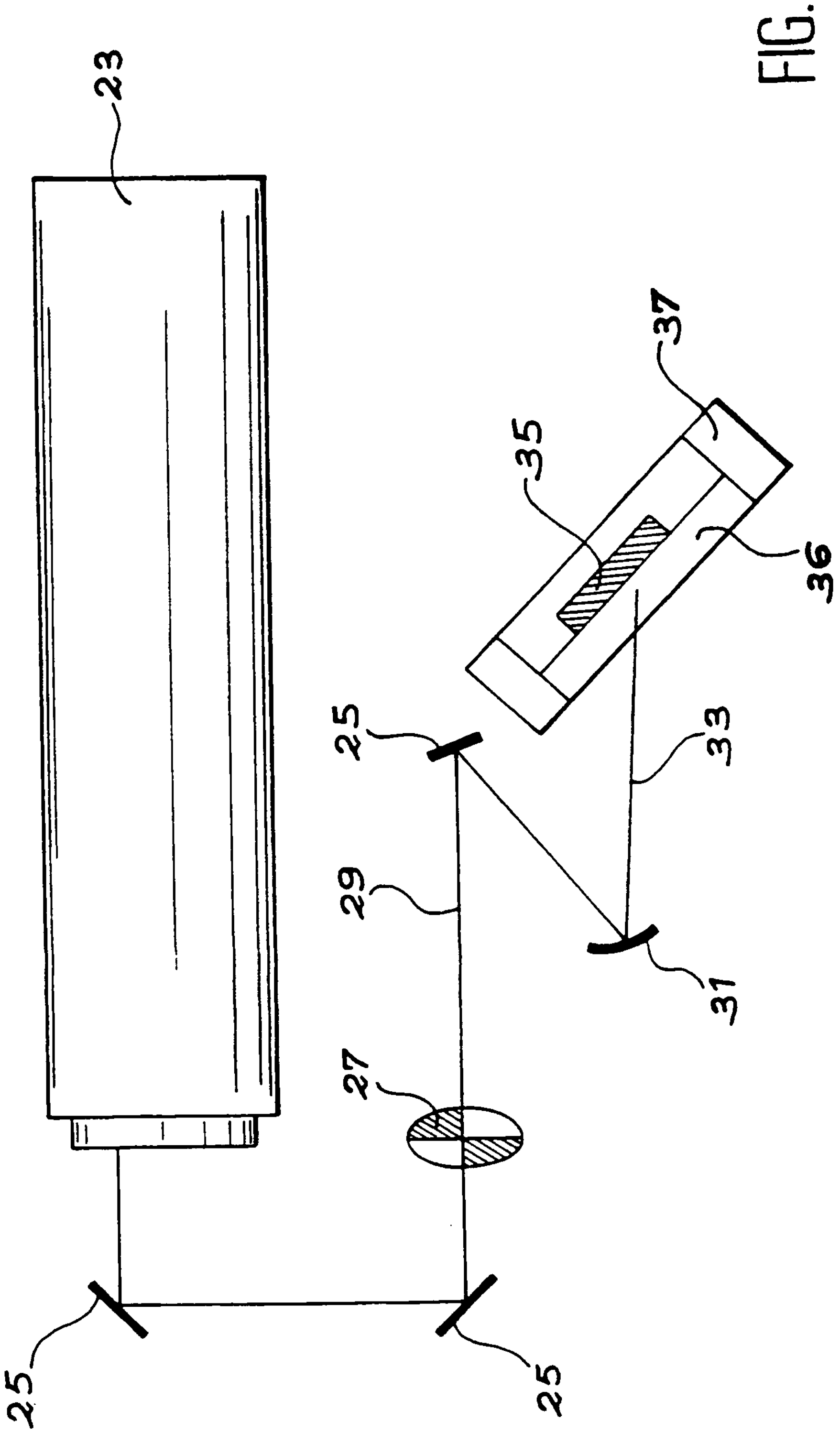


FIG. 6

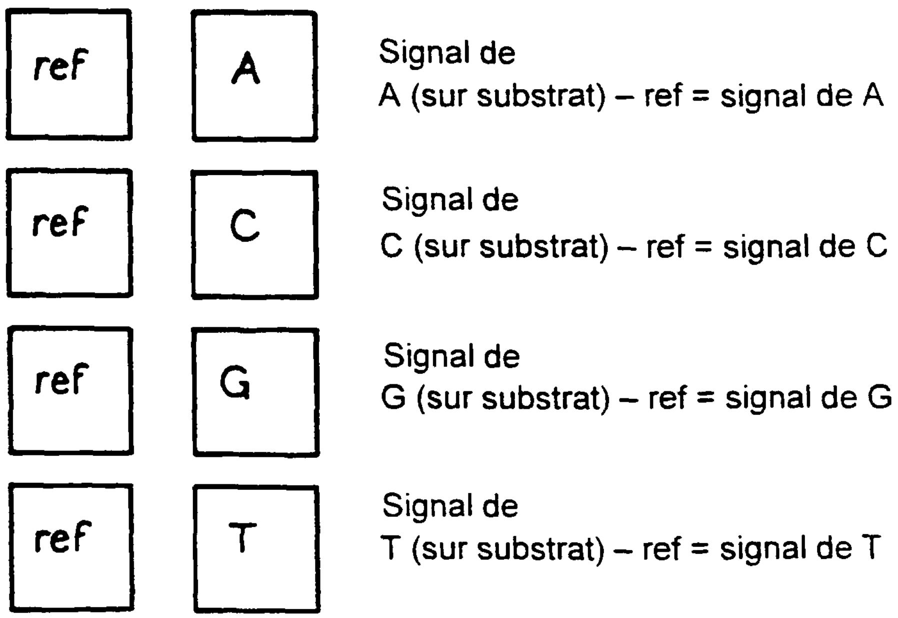
ref
A
Signal de
A (sur substrat) – ref = signal de A
ref
C
Signal de
C (sur substrat) – ref = signal de C
ref
G
Signal de
G (sur substrat) – ref = signal de G
ref
T
Signal de
T (sur substrat) – ref = signal de T

FIG. 7

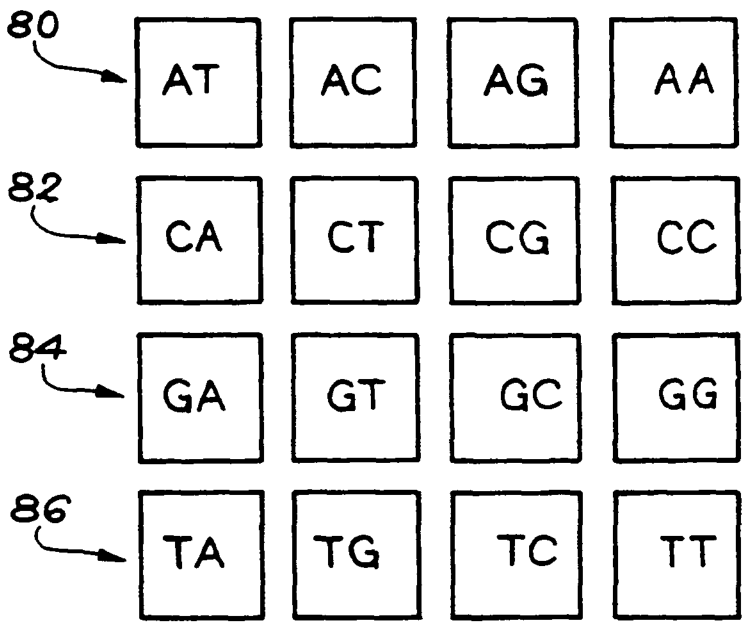
80
AT
AC
AG
AA
82
CA
CT
CG
CC
84
GA
GT
GC
GG
86
TA
TG
TC
TT

FIG. 8

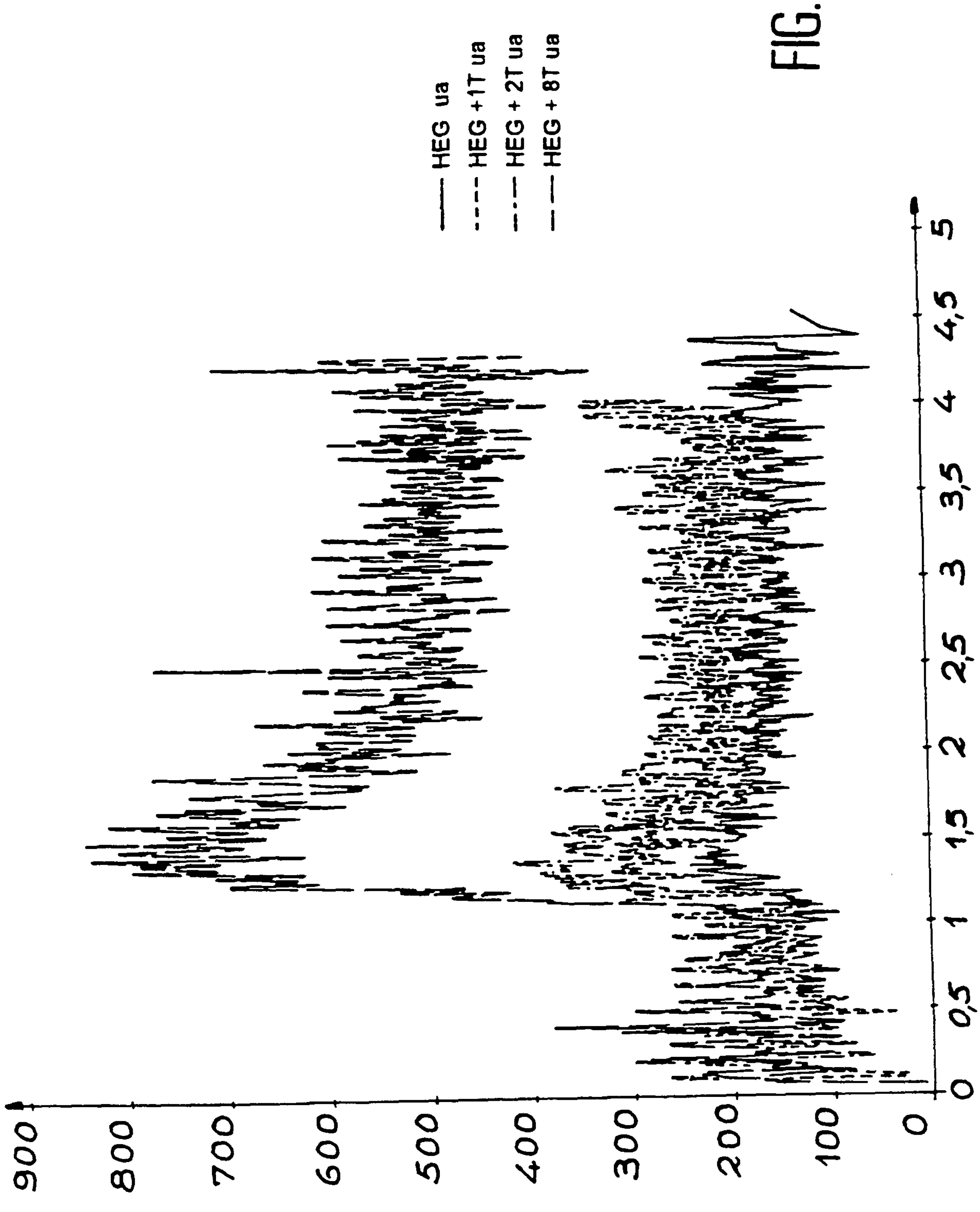
HEG ua
HEG +1T ua
HEG + 2T ua
HEG + 8T ua
900
800
700
600
500
400
300
200
100
0
0
0,5
1
1,5
2
2,5
3
3,5
4
4,5
5

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9427719 A
- US 5874213 A


### Littérature non-brevet citée dans la description


- **Southern EM.** *Nucleic Acid Research,* 25 Avril 1994, vol. 22 (8), 1368-1373
- **R.J. Kaiser ; L.E. Hood.** *Biosensors and Bioelectronics,* 1996, vol. 11 (6/7), 687-690
- *Proc. Natl. Acad. Sci. USA,* 26 Novembre 1996, vol. 93 (24), 13555-60
- *Caruthers, Science,* Octobre 1985, 281
- *Tetrahedron Letters,* 1984, vol. 25 (4), 375-378
- **Pease A.C.** *Proc. Natl. Acad. Sci. USA,* Mai 1994, vol. 91, 5022-5026
- **Glen Mac Gall.** *J. Org. Chem.,* 1998, vol. 63, 241-246
- **Little P.D.** *Anal. Chem.,* 1997, vol. 69, 4540-4546
- **ADELHELM K et al.** Development of a sensitive detection system based on the photothermal effect for biomolecular interaction studies. *BIOMEDICAL OPTOELECTRONICS IN CLINICAL CHEMISTRY,* 14 Septembre 1995, vol. 2629, 325-333
- **ODAKE TAMAO et al.** High-speed separation using miniaturized slab gel and high spatial resolution detection by thermal lens microscope. *PROCEEDINGS OF THE 1998 THERMAL THERAPY, LASER WELDING, AND TISSUE INTERACTIONS,* 09 Septembre 1998, vol. 3565, 126-133
- **J.H. WEIL.** Biochimie Générale. MASSON, 279-288
- **Caruthers.** *Science,* Octobre 1985, 281
- **Gray et al.** Ellipsometric and interferometric characterization of DNA probes immobilized on a combinational assay. *Langmuir,* 1997, vol. 13, 2833-2842
- Photothermal Spectroscopy Methods for Chemical Analysis. **S.E. Bialkowski.** Chemical Analysis : a Series of Monographs on Analytical Chemistry and its Applications. Wiley, vol. 134
- *Chemistry Letters,* 1998, 257-258
- *Analytical Biochemistry,* 1997, vol. 247, 96-101
- **Caruthers.** *Sciences,* Octobre 1985, 281